**Europäisches Patentamt**

**European Patent Office**

**Office européen des brevets**

(19)

(11) Numéro de publication : **0 466 578 A1**

# (12) DEMANDE DE BREVET EUROPEEN

(21) Numéro de dépôt : **91401906.2**

(22) Date de dépôt : **09.07.91**

(51) Int. Cl.$^5$ : **G01B 5/24, G01B 3/48**

(30) Priorité : **11.07.90 FR 9008832**

(43) Date de publication de la demande :
**15.01.92 Bulletin 92/03**

(84) Etats contractants désignés :
**BE CH DE ES GB IT LI**

(71) Demandeur : **AEROSPATIALE Société Nationale Industrielle**
**37, Boulevard de Montmorency**
**F-75781 Paris Cédex 16 (FR)**

(72) Inventeur : **Barrere, Gérard**
**7 rue Jean Itey**
**F-33310 Lormont (FR)**

(74) Mandataire : **Mongrédien, André et al**
**c/o SOCIETE DE PROTECTION DES INVENTIONS 25, rue de Ponthieu**
**F-75008 Paris (FR)**

(54) **Procédé et appareil pour le mesurage par palpage de la position de l'axe du taraudage d'un trou.**

(57) L'invention permet le mesurage précis de l'emplacement de l'axe (1) d'un taraudage d'un trou au moyen d'un dispositif de mesurage tridimensionnel.

Le procédé consiste à insérer à l'intérieur du trou taraudé, un appareil dont des mâchoires d'extrémité (12) peuvent s'écarter élastiquement de l'axe (1) de l'appareil pour venir se bloquer dans les filets du trou taraudé. L'appareil est ainsi solidarisé de la pièce (2) et son axe (1) est en coïncidence avec l'axe (1) du taraudage. Une paroi interne conique (14) des mâchoires (12) permet l'écartement de ces mâchoires (12) par translation des butées (18) d'un axe central (20) prenant appui contre ces surfaces internes (14).

**EP 0 466 578 A1**

Jouve, 18, rue Saint-Denis, 75001 PARIS

FIG. 4

## DOMAINE DE L'INVENTION

L'invention concerne de très nombreux domaines mécaniques, dans lesquels, la position de l'axe du taraudage des trous taraudés doit être mesurée avec une très grande précision.

## ART ANTERIEUR

Plusieurs méthodes et dispositifs sont actuellement utilisés pour mesurer la position de l'axe des filetages et des taraudages. La plupart de ces méthodes utilisent des appareils de mesure effectuant un contrôle tridimensionnel. Les principales méthodes, actuellement utilisées, sont les suivantes.

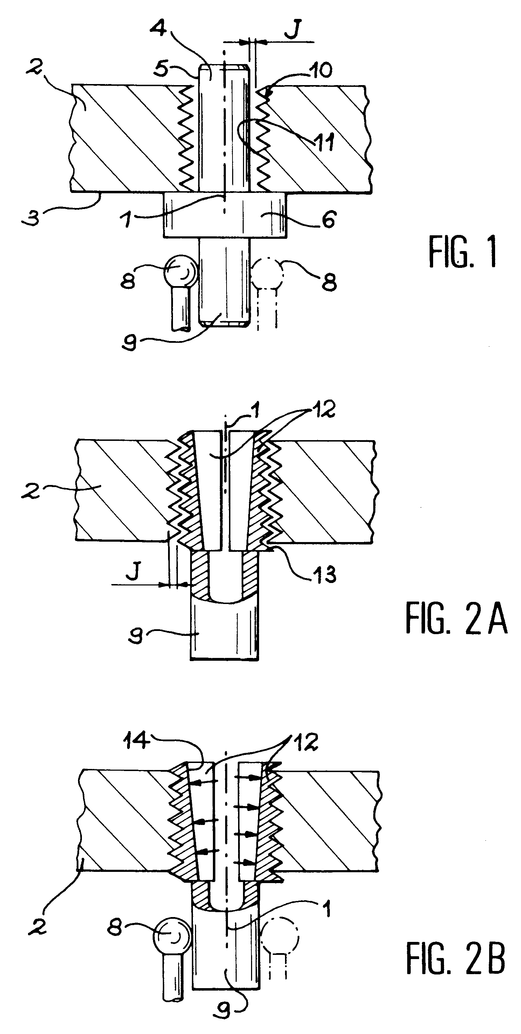

Comme le montre la figure 1, il est d'abord possible d'utiliser une tige lisse 4 calibrée, pour matérialiser l'axe 1 du taraudage 10 d'un trou pratiqué dans une pièce 2. Cela s'avère insatisfaisant, car l'usage d'une telle tige 4 nécessite que celle-ci ait un diamètre inférieur au diamètre délimité par les sommets 11 des filets du taraudage 10. Il s'ensuit l'existence d'un jeu J entre la tige 4 et les sommets 11 du taraudage 10. Le positionnement de l'axe 1 du taraudage 10 n'est donc pas précis et n'est même pas effectif puisque la tige 4 peut bouger. L'utilisation d'un épaulement 6 pour prendre appui sur la pièce 2 évite les mouvements de l'axe 1, mais entraîne un positionnement obligatoirement perpendiculaire de cet axe 1 par rapport à la surface 3 de la pièce 2. Les palpeurs 8 d'un dispositif de mesurage tridimensionnel, placés contre la surface externe 9 de la tige 4, enregistrent donc des mesures difficilement exploitables.

Il est ensuite possible de déterminer la position de l'axe du taraudage par palpage des flancs des filets du taraudage du trou. Ce palpage de l'intérieur du trou limite cette méthode à la vérification de filetages dont le pas est supérieur à trois millimètres. De plus, cette méthode est complexe à mettre en oeuvre.

Il est également possible de palper les sommets des filets du taraudage du trou, à l'aide d'une tige cylindrique, calibrée, introduite dans le trou et dont le diamètre est égal au diamètre théorique des sommets des filets. Ce procédé permet de déterminer l'axe du cylindre des sommets des filets du taraudage, mais n'est pas représentatif de l'axe du taraudage lui-même.

Des inserts métalliques se montant dans les trous taraudés peuvent être également utilisés. Ils sont prévus avec un diamètre usiné aux cotes minimales pour pouvoir se monter dans tous les trous taraudés à vérifier. Il en résulte un jeu important entre la pièce et l'insert, l'axe de l'insert ne pouvant pas être forcément coaxial à celui du filetage. De plus, ces inserts présentent un épaulement qui vient s'appuyer sur la face de la pièce. Dans ces conditions, l'axe de l'insert est obligatoirement perpendiculaire à la face d'appui.

Un autre procédé consiste à utiliser des tiges filetées, au même pas que le taraudage à mesurer, mais avec un diamètre légèrement croissant sur une partie conique de la tige. Celle-ci est vissée à l'intérieur du trou dont l'axe du taraudage est à matérialiser, jusqu'au coincement de cette tige dans le trou. Ce système a pour inconvénient que la tige se solidarise dans le trou, simplement par rapport aux premiers filets du taraudage, et n'est donc pas représentative de tout le taraudage.

Le but de l'invention est de remédier à ces inconvénients, en proposant un procédé de mesurage par palpage, utilisant un appareil matérialisant avec une grande précision l'axe du taraudage à mesurer.

## RESUME DE L'INVENTION

Un premier objet principal de l'invention est un procédé de mesurage par palpage de la position de l'axe du taraudage d'un trou taraudé, consistant à :
- matérialiser l'axe au moyen d'un appareil introduit partiellement dans le trou taraudé et possédant une partie externe restant hors du trou et servant au mesurage par palpage de sa surface externe ; et
- palper la surface externe de ladite partie externe au moyen de palpeurs d'un dispositif de mesurage tridimensionnel.

Selon l'invention, l'appareil est fixé dans la pièce par écartement élastique de plusieurs mâchoires en forme de secteurs de tubes cylindriques filetés au même pas et au même diamètre que ceux du taraudage dont l'axe est à mesurer, la position naturelle au repos, c'est-à-dire sans contraintes, les mâchoires étant telles qu'elles définissent un diamètre fileté très légèrement inférieur au diamètre du taraudage dont l'axe est à mesurer, permettant ainsi l'introduction par vissage de l'appareil dans le trou taraudé.

Une fois écartées, les mâchoires permettent de maintenir l'appareil fixé dans le trou, par rapport au taraudage, dont l'axe est à matérialiser.

Le procédé est particulièrement efficace quand les mâchoires sont au nombre de trois.

Un autre objet principal de l'invention est un appareil utilisé dans le procédé qui vient d'être décrit.

Selon l'invention, il comprend :
- un corps cylindrique définissant l'axe principal de l'appareil et portant à une première extrémité les mâchoires, dont les parois internes sont tronconiques ;
- un axe écarteur placé coaxialement dans le corps portant à une première extrémité des butées d'écartement pour écarter les mâchoires, lors d'une translation de l'axe écarteur dans le corps ; et
- des moyens de commande de la translation de l'axe écarteur dans le corps.

La réalisation principale prévoit que chaque mâchoire est reliée au corps par une partie de liaison restreinte, placée sur le côté de la base de la mâchoire près du coin de celle-ci, de manière à former une fente séparant la mâchoire, d'une part de la mâchoire adjacente, et d'autre part, du corps sur une grande partie de la base de la mâchoire, pour doter la mâchoire d'une flexibilité relative par rapport au corps, permettant ainsi à la mâchoire de s'écarter de l'axe à mesurer.

La réalisation principale prévoit également que les moyens de commande de la translation de l'axe écarteur dans le corps comprennent :

– un filetage sur une deuxième extrémité de l'axe écarteur ;

– un écrou se vissant sur ledit filetage ; et

– des moyens de blocage en rotation de l'axe écarteur par rapport au corps.

Ces moyens de blocage en rotation sont de préférence réalisés par :

– une courte fente longitudinale dans le corps ;

– un trou dans l'axe écarteur perpendiculaire à l'axe à mesurer et dont le diamètre est égal à la largeur de la fente, et destiné à être placé en regard de la fente ; et

– une goupille de diamètre égal au diamètre du trou pour être introduite dans la fente et dans le trou.

Selon un aspect de l'invention, les butées d'écartement sont placées angulairement de manière à se trouver, lorsque la goupille est insérée dans le corps et dans l'axe écarteur, chacune en appui sur le côté des mâchoires opposé à la partie de liaison de la mâchoire, pour imposer à la mâchoire une déformation par écartement de celle-ci par rapport à l'axe de l'appareil.

Une rondelle peut avantageusement compléter l'appareil en étant placée entre l'écrou et le corps.

L'appareil est réalisé de manière préférentielle en acier inoxydable.

## LISTE DES FIGURES

La présente invention et ses caractéristiques techniques seront mieux comprises à la lecture de la description, donnée à titre d'exemple. Elle est accompagnée de figures, représentant respectivement :

– figure 1, en coupe, un procédé de matérialisation de l'axe d'un taraudage selon l'art antérieur ;

– figures 2A, 2B, en coupe, le principe du procédé selon l'invention dans ses deux phases ;

– figure 3, en perspective et en éclaté, l'appareil utilisé dans l'invention ;

– figure 4, en coupe, le même appareil selon l'invention, dans une position montée dans un taraudage ;

– figure 5, en coupe selon la ligne A-A de la figure 4, l'appareil utilisé dans la présente invention.

## DESCRIPTION DETAILLEE D'UNE PRINCIPALE REALISATION DE L'INVENTION

En référence aux figures 2A et 2B, le principe du procédé selon l'invention est le suivant.

Il est toujours nécessaire, pour matérialiser l'axe 1 d'un taraudage, d'utiliser un appareil devant être introduit dans le trou taraudé. Cet appareil comporte toujours une surface 9 de mesure, sur laquelle prendront appui, ultérieurement, les palpeurs du dispositif de mesurage tridimensionnel.

Selon l'invention, cet appareil possède des mâchoires 12 introduites dans le trou taraudé. Leur surface externe est composée d'un filetage 13 complémentaire au taraudage 10, c'est-à-dire ayant un pas égal à celui-ci. De plus, le diamètre de ces mâchoires 12 doit correspondre au diamètre du trou taraudé, de manière à ce que l'appareil puisse être introduit par ces mâchoires 12 à l'intérieur du trou taraudé, par vissage de l'appareil. Le diamètre nominal des mâchoires 12 doit donc être très légèrement inférieur au diamètre nominal du taraudage 10 (de l'ordre de 2/10e de millimètre).

La différence entre les deux diamètres nominaux du filetage 13 et du taraudage 10 fait apparaître un jeu J. Comme le montre la figure 2B, la disparition de ce jeu J, selon l'invention, se fait par écartement des mâchoires 12 contre le taraudage 10. L'introduction de l'appareil dans le trou taraudé se fait bien entendu avant l'écartement des mâchoires 12.

La mesure à l'aide de l'appareil de mesurage tridimensionnel peut donc avoir lieu, comme le suggère les têtes de palpage 8 en contact avec la surface externe 9 de l'appareil.

L'écartement des mâchoires 12 peut se faire au moyen des surfaces internes 14 de celles-ci, prévu inclinées, de manière à ce qu'elles définissent un cône. De la sorte, la translation d'un objet venant tangenter l'intérieur du cône, peut provoquer l'écartement de ces mâchoires 12. Cette manière de procéder à l'écartement sera expliquée en détail dans les' paragraphes suivants.

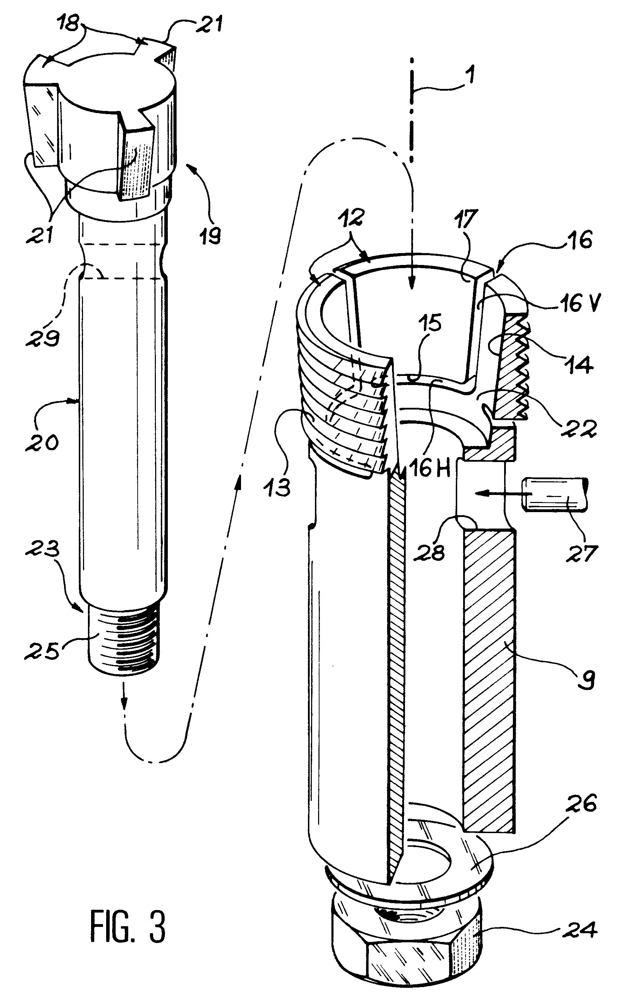

En référence à la figure 3, une caractéristique principale de l'invention est le fait que les mâchoires 12 s'écartent de l'axe 1 de l'appareil, de manière élastique, de par leur configuration et leur liaison avec le corps 2.

En effet, dans la réalisation décrite, les mâchoires 12 font partie intégrante du corps 2.

En fait, chaque mâchoire 12 est reliée par une partie de liaison 22 relativement restreinte et placée sur le côté de la base 15 de chaque mâchoire 12. Le reste de la base 15 de chaque mâchoire 12 n'est pas relié au corps 2, mais y fait face par une première partie horizontale 16H d'une fente 16. Le reste de la fente 16V est vertical et sépare deux mâchoires 12 adjacentes.

En considérant la mâchoire 12, qui est vue de face et centrée sur l'axe 1 de l'appareil, on comprend qu'en appuyant sur le point supérieur droit 17, on obtient une flèche maximale, compte tenu que la partie de liaison 22 se trouve dans le point inférieur gauche de cette mâchoire. Le mouvement ou la déformation de la mâchoire 12 par rapport au corps 2 sera donc maximale au point supérieur droit 17.

Dans la réalisation principale, ce mouvement est obtenu au moyen de butées d'écartement 18 prévues à une première extrémité 19 d'un axe d'écartement 20. Les butées 18 sont destinées chacune à écarter une mâchoire 12. Elles doivent avoir une surface d'appui 21, constituée par la surface externe de chaque butée 18. Ces surfaces d'appui 21 sont des secteurs de cylindre, d'un diamètre D très légèrement inférieur au diamètre minimal du cône défini par les surfaces internes 14 des mâchoires 12.

Comme le suggère les flèches de la figure 3, l'axe écarteur 20 est introduit à l'intérieur du corps 2 par son extrémité inférieure 23, jusqu'à ce que les butées d'écartement 18 viennent chacune en contact de la surface interne 14 des dents 12. L'appareil est alors introduit dans le trou taraudé par vissage. Les filets extérieurs du filetage 13 viennent s'insérer dans les filets du taraudage 10. L'axe écarteur 20 est alors translaté vers le bas, en considérant la position choisie sur la figure 3. La conicité des surfaces intérieures 14 des mâchoires 12 est telle que le cône défini par ces surfaces intérieures 14 a son sommet fictif vers le bas de la figure, c'est-à-dire que l'épaisseur des mâchoires 12 va en augmentant, en considérant chaque mâchoire de haut en bas. De ce fait, la translation des butées d'écartement 18 vers le bas entraîne des forces de pression contre les surfaces internes 14 des mâchoires 12 et tendent à écarter ces dernières. Lorsque les filets 13 du filetage des mâchoires 12 sont en contact complet avec les filets du taraudage 10 dont l'axe est à matérialiser, il se produit un phénomène de blocage de l'ensemble de l'appareil dans le trou taraudé.

Le mouvement de translation de l'axe écarteur 20, dans le corps 2, est par exemple obtenu au moyen d'un système vis-écrou. Il est en effet facilement réalisé à l'aide d'un écrou 24 se vissant sur un filetage 25 de l'extrémité inférieure 23 de l'axe écarteur 20. Une rondelle 26 peut également être utilisée entre l'écrou 24 et le corps 2 pour éviter l'usure. Un vissage de l'écrou 24 sur ce filetage 25 de l'axe écarteur 20 entraîne une translation de celui-ci dans le corps 2, si l'écrou 24 est en appui sur le corps 2, par l'intermédiaire éventuellement de la rondelle 26.

Pour éviter que le vissage de l'écrou 24 ne face tourner l'axe écarteur 20 par frottement, des moyens de blocage en rotation de l'axe écarteur 20 par rapport au corps 2 sont prévus. Ils peuvent être réalisés, de préférence, à l'aide d'une goupille 27 introduite à la fois dans une courte fente longitudinale 28 pratiquée dans le corps 2 et également introduite dans un trou transversal 29 de l'axe écarteur 20. Le diamètre de la goupille 27, du trou 29 et la largeur de la fente 28 sont en correspondance, de manière à ce que l'introduction de la goupille 27 dans les deux autres éléments 28 et 29 se fasse par un ajustement sans jeu excessif. La longueur de la fente longitudinale 28 correspond au déplacement possible des butées d'écartement 18 par rapport aux mâchoires 12.

La position relative de la fente 28 par rapport au corps 2 est angulairement déterminée pour que les butées d'écartement 18 de l'axe d'écartement 20 appuient sur les côtés des mâchoires 12 opposés aux parties de liaison 22, en l'occurrence sur la partie droite de la mâchoire 12 du milieu sur la figure 3. Ceci permet d'agir sur la partie la plus flexible de chaque mâchoire 12.

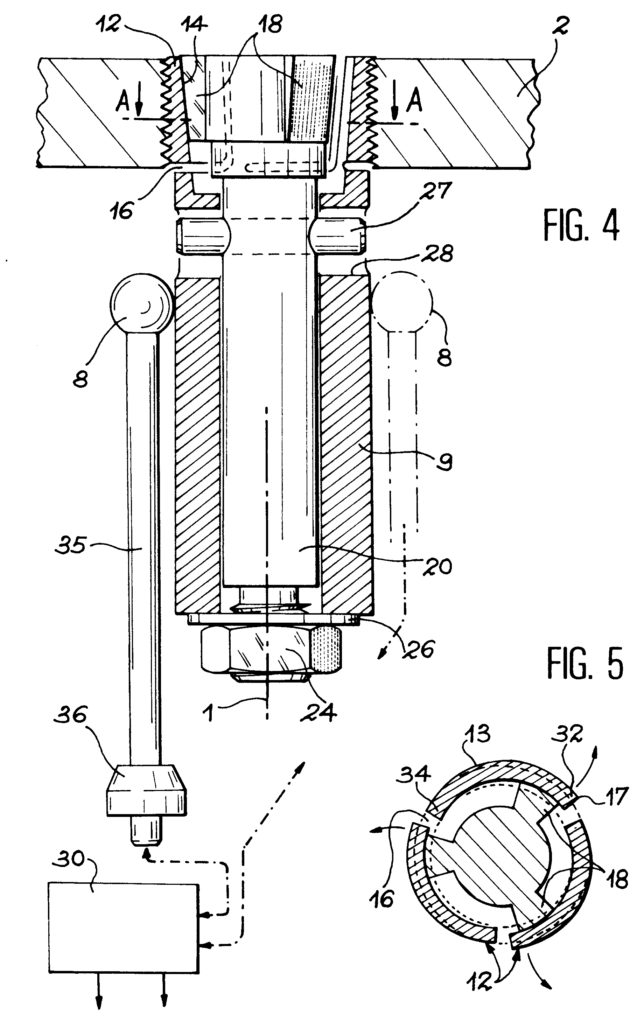

Cette flexiblité relative de chacune des mâchoires 12 est mieux représentée sur la figure 5, qui est une coupe horizontale selon la ligne A-A de la figure 4. Cette figure 4 représente l'appareil selon l'invention, monté dans un trou taraudé d'une pièce 2. Les mâchoires 12 sont écartées sous la poussée des butées d'écartement 18, suite au serrage de l'écrou 24 entraînant la translation vers le bas de l'axe écarteur 20. Les mâchoires 12 prenant appui sur toute leur hauteur dans le taraudage de la pièce 2, l'axe 1 de l'appareil représente très précisément l'axe effectif de ce taraudage.

En se reportant à la figure 5, on constate que, chaque butée d'écartement 18 s'appuie sur le côté 32 de la mâchoire 12 opposé au côté 34 de cette même mâchoire, à la base duquel se trouve la liaison 22. Le coin droit 17 et la partie de la mâchoire 12 subit la plus grande déformation, suivi de tout le côté droit. Le positionnement des butées d'écartement 18 est déterminé par la position du trou 29 de l'axe écarteur 20 et par l'introduction de la goupille 27, à la fois dans ce trou 29 de l'axe écarteur 20, mais aussi dans la fente 28 du corps 2.

L'appareil est réalisé en un matériau résistant, de préférence à la corrosion, mais ayant une grande dureté, par exemple l'acier inoxydable.

En référence à la figure 4, la première partie du procédé selon l'invention consiste à introduire l'appareil par vissage des mâchoires 12 dans le trou taraudé, après que ces mâchoires aient été desserrées au moyen de l'écrou 24. Une fois les mâchoires 12 mises en regard du trou taraudé, l'écrou 24 est serré et les mâchoires sont écartées. L'appareil est alors fixé dans le trou et la deuxième partie du procédé peut avoir lieu. Elle consiste à venir palper au moyen des têtes de palpage 8 la surface extérieure 9 du corps 2.

Sur la figure 4, les palpeurs représentés sont ceux d'une machine de mesure tridimensionnelle. En effet, le mesurage unidirectionnel, à l'aide de comparateurs, colonnes de mesure ou palpeurs, et de cales étalons, il est nécessaire d'utiliser des pièces de référence telles qu'un marbre, une équerre, une règle, une table sinus ou un plateau tournant. Les manoeuvres de mise en place de la pièce dans ces outils de mesure, appelées dégauchissage, sont souvent longues et délicates. Des montages de contrôle coûteux sont souvent nécessaires. Les incertitudes de mesurage dépendent des dispersions de tous les appareillages utilisés, ainsi que du savoir-faire de l'opérateur. Les pièces mécaniques à contrôler sont de plus en plus complexes et précises. Ce contrôle par mesurage unidirectionnel s'avère donc coûteux, lent et peu fiable.

Les machines de mesurage tridimensionnel permettent de remédier à ces inconvénients. Elles utilisent trois axes de déplacement perpendiculaires et un ou plusieurs palpeurs permettant de détecter le ou les points de contact avec une ou plusieurs surface de la pièce à contrôler. En référence à la figure 4, ces palpeurs sont constitués d'une sphère de mesure 8, montée sur une tige 35, elle-même fixée à la tête de mesure 36. Le ou les palpeurs sont associés à un calculateur 30, qui gère l'ensemble des signaux de mesure issus des palpeurs pour déterminer les coordonnées de chaque point de mesure par l'intermédiaire de règles de mesure équipant chaque axe.

L'édition et la sauvegarde des résultats peuvent être automatiquement obtenues.

L'appareil selon l'invention est donc particulièrement bien adapté à l'utilisation d'un dispositif de mesurage tridimensionnel.

**Revendications**

1.  Procédé de mesurage par palpage de la position de l'axe (1) du taraudage d'un trou taraudé d'une pièce (2) consistant à :
    – matérialiser l'axe (1) au moyen d'un appareil introduit partiellement dans le trou taraudé et possédant une partie externe restant hors du trou et servant au mesure par palpage de sa ,surface externe (9) ; et
    – palpage de la surface externe (9) de ladite partie externe au moyen de palpeurs (8) d'un dispositif de mesurage tridimensionnel,
    caractérisé en ce que l'appareil est fixé à la pièce (2) par écartement élastique de plusieurs mâchoires (12)en forme de secteurs de tubes cylindriques filetés au même pas et au même diamètre que ceux du taraudage, dont l'axe (1) est à mesurer, la position naturelle au repos sans contrainte des mâchoires (12) étant telle que les mâchoires (12) définissent un diamètre fileté très légèrement inférieur au diamètre du taraudage, dont l'axe (1) est à mesurer, permettant ainsi l'introduction par vissage de l'appareil dans le trou taraudé.

2.  Procédé selon la revendication 1, caractérisé en ce que les mâchoires (12) sont au nombre de trois.

3.  Appareil utilisé dans le procédé selon la revendication 1 ou 2, caractérisé en ce qu'il comprend :
    – un corps (2) cylindrique, portant à une première extrémité les mâchoires (12) dont les parois internes (14) sont tronconiques ;
    – un axe écarteur (20) à placer coaxialement dans le corps (2) et portant à une première extrémité des butées d'écartement (18) pour écarter les mâchoires (12), lors d'une translation de l'axe écarteur (20) dans le corps (2) ; et
    – des moyens de commande de la translation de l'axe écarteur (20) dans le corps (2).

4.  Appareil selon la revendication 3, caractérisé en ce que chaque mâchoire (12) est reliée au corps (2) par une partie de liaison restreinte (22) placée sur le côté de' la base de la mâchoire (12) près du coin de celle-ci, de manière à former une fente (16) séparant la mâchoire (12) d'une part, de la mâchoire adjacente et, d'autre part, du corps (2) sur une grande partie de la base (15) de la mâchoire (12), pour doter la mâchoire d'une flexibilité relative par rapport au corps (2), permettant ainsi à la mâchoire (12) de s'écarter de l'axe (1) du corps à mesurer.

5.  Appareil selon la revendication 3 ou 4, caractérisé en ce que les moyens de commande de la translation de l'axe d'écarteur (20) par rapport au corps (2), comprennent :
    – un filetage (25) sur une deuxième extrémité de l'axe écarteur (20) ;
    – un écrou (24) se vissant sur le filetage (25) ; et
    – des moyens de blocage en rotation de l'axe écarteur (20) par rapport au corps (2).

6.  Appareil selon la revendication 5, caractérisé en ce que les moyens de blocage en rotation comprennent :
    – une courte fente longitudinale (28) dans le corps (2) ;
    – un trou (29) dans l'axe écarteur (20) perpendiculaire à l'axe à mesurer (1) de diamètre égal à la largeur de la fente longitudinale (28), destiné à être placé en regard de la fente (28) ; et
    – une goupille (27) de diamètre égal au diamètre du trou (29) de l'axe écarteur (20), introduite dans la fente longitudinale (28) du corps (2) et le trou (29) de l'axe écarteur (20).

7.  Appareil selon les revendications 4 et 6, caractérisé en ce que les butées d'écartement (18) sont placées angulairement pour se trouver, lorsque la goupille (27) est insérée dans le corps (2) et l'axe écarteur (20), chacune en appui sur le côté (32) des mâchoires (12), opposé à la partie de liaison (22) de la mâchoire (12) pour imposer à la mâchoire (12) une déformation par écartement par rapport à l'axe de l'appareil (1).

8. Appareil selon la revendication 5, caractérisé en ce qu'il comprend une rondelle (26) entre l'écrou (24) et le corps (2).

9. Appareil selon l'une quelconque des revendications 3 à 8, caractérisé en ce qu'il est en acier inoxydable.

EP 0 466 578 A1

FIG. 1

FIG. 2 A

FIG. 2 B

FIG. 3

FIG. 4

FIG. 5

EP 0 466 578 A1

**Office européen des brevets**

**RAPPORT DE RECHERCHE EUROPEENNE**

Numero de la demande

EP 91 40 1906

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 859 730 (S.G. JOHNSON)<br>* revendications 1-5 *<br>--- | 1,3 | G 01 B 5/24<br>G 01 B 3/48 |
| A | US-A-4 356 636 (R.G. ROBERTS)<br>* colonnes 3-5 *<br>--- | 1,3 | |
| A | DD-A- 41 637 (W. BÜTTNER et al.)<br>* colonnes 3,4 *<br>--- | 1 | |
| A | PATENT ABSTRACTS OF JAPAN vol. 10, no. 220 (P-482)(2276), 31 juillet 1986; & JP - A - 61057806 (TOYODA MACH WORKS LTD) 24.03.1986<br>----- | 1 | |

**DOMAINES TECHNIQUES RECHERCHES (Int. Cl.5)**

G 01 B 3/00
G 01 B 5/00
G 01 B 7/00
G 01 B 21/00

Le présent rapport a été établi pour toutes les revendications

| Lieu de la recherche | Date d'achèvement de la recherche | Examinateur |
|---|---|---|
| BERLIN | 27-09-1991 | DIETRICH A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant